# EUROPÄISCHE PATENTSCHRIFT

(11) **EP 2 550 487 B1**
(45) Veröffentlichungstag und Bekanntmachung des Hinweises auf die Patenterteilung: **09.07.2014**
(21) Anmeldenummer: 10718843.5
(22) Anmeldetag: 22.03.2010
(51) Int. Cl.: F24D 3/08, F24D 11/00, F28D 20/00

(54) **VERFAHREN UND ANLAGE ZUR WARMWASSERAUFBEREITUNG**
METHOD AND SYSTEM FOR PROVIDING HOT WATER
PROCÉDÉ ET INSTALLATION DE PRÉPARATION D'EAU CHAUDE

(43) Veröffentlichungstag der Anmeldung: 30.01.2013
(73) Patentinhaber: VNG - Verbundnetz Gas AG, 04347 Leipzig (DE)
(72) Erfinder: REINSPERGER, René, 06606 Starsiedel (DE); GATZKE, Ingo, 04289 Leipzig (DE); HARTAN, Jörg, 06120 Halle (DE)
(74) Vertreter: Castell, Klaus
(86) Internationale Anmeldenummer: PCT/DE2010/000327
(87) Internationale Veröffentlichungsnummer: WO 2011/116736

(56) Entgegenhaltungen:
- EP-A2- 1 398 591
- WO-A2-2009/130294
- AT-B- 400 359
- DE-A1- 19 740 398
- DE-B- 1 122 237

## Beschreibung

Die Erfindung betrifft ein Verfahren und eine, vorzugsweise nach dem Prinzip der Kraft- Wärme-Kopplung (KWK) arbeitenden Anlage, zur Aufbereitung von Warmwasser in Gebäuden und Einrichtungen, insbesondere zur Aufbereitung von Warmwasser in Einfamilienhäusern, unter Verwendung eines Mikro- Blockheizkraftwerkes (BHKW)

Nach dem Prinzip der Kraft- Wärme-Kopplung arbeitende Anlagen zur Versorgung von Gebäuden und Einrichtungen mit Wärme und elektrischer Energie sind beispielsweise aus DE 197 40 398 C2 bekannt. Kernstück derartiger Anlagen ist neben den Aggregaten zur Erzeugung elektrischer Energie unter Nutzung von Primärenergie, wie Brennkraftmaschinen, Brennstoffzellen, Stirlingmaschinen, der Wärmepufferspeicher, der die aus der Nutzung von Abwärme und Solarenergie erzeugte Wärmeenergie speichert und für die Aufbereitung von warmen Wasser für Heizungszwecke und für den individuellen menschlichen Bedarf bereitstellt. Daraus ergibt sich zwangsläufig, dass die Wärmepufferspeicher, die zumeist als Schichtenspeicher ausgebildet sind, einer ständigen Verbesserung und Weiterentwicklung unterliegen, um eine bestmögliche, effektive Speicherung der Wärmeenergie und eine an die örtlichen Bedingungen anpassbare, rationelle und wirtschaftliche Warmwasseraufbereitung zu erreichen.

Vergleichbare Anlagen zur Warmwasseraufbereitung unter Verwendung eines Wärmepufferspeichers sind beispielsweise auch aus DE 102 37 681 A1, DE 100 17 640 A1, DE 20 2008 004 421 U1 und DE 36 24 261 C2 bekannt. Der gemeinsame Nachteil dieser Anlagen besteht darin, dass aufgrund der Betriebsweise die thermische Kapazität der Speicher nicht effektiv genutzt werden kann. Außerdem ist das Problem einer unzulässigen Ablagerung von Kalk bzw. die Kalkbildung im Wärmeübertrager wegen der Temperaturverhältnisse im Speicher nicht zufriedenstellend gelöst.

DE 20 2004 003 055 U1 beschreibt einen Schichtenspeicher mit einem internen Rohrschlangen-Wärmeübertrager. Der entscheidende Nachteil solcher Lösungen besteht letztlich immer darin, dass die Rohrschlange im Ruhezustand die Temperatur des Wassers im oberen Bereich des Wärmepufferspeichers annimmt. Damit ist bei Temperaturen über 60 °C, die beispielsweise für die Vermeidung der Legionellenbildung und -abtötung benötigt wird, grundsätzlich die Gefahr der Verkalkung des Wärmeübertragers gegeben. Geringere Temperaturen im oberen Speicherbereich können zwar die Verkalkungsgefahr deutlich reduzieren, haben aber zur Folge, dass die Legionellenbildung nicht mehr sicher ausgeschlossen werden kann. Außerdem reduziert sich die Leistung der Warmwasserbereitung überproportional, bzw. das für die Warmwasserbereitung vorzuhaltende Volumen im oberen Bereich des Speichers muss entsprechend erhöht werden. Dies geht wiederum zu Lasten der Speicherwirkung des Speichers, der im Betrieb von Anlagen, die nach dem Prinzip der Kraft-Wärme-Kopplung arbeiten, als Wärmeenergiepuffer dient.

Die aus DE 20 2008 004 421 U1 bekannte Lösung für eine Vorrichtung zum Erwärmen von Trinkwasser weist ebenfalls die o.g. Nachteilen auf und besitzt für die Warmwasserbereitung lediglich eine Entnahmestelle im oberen Bereich des Warmwasserspeichers. Eine optimale Entnahme im Sinne der bestmöglichen Schichtung und Speicherausnutzung wird damit nicht erreicht. Um die benötigte Vorlauftemperatur bereitzustellen, muss immer das heiße Wasser im oberen Bereich eines Warmwasserspeichers angezapft werden, wodurch die Schichtung gestört wird. Die thermische Speicherkapazität kann somit nicht optimal ausgenutzt werden.

Die in DE 197 40 389 C2 vorgeschlagene Kraft-Wärme-gekoppelte Einrichtung zur Energieversorgung sieht für die Entnahme des Wärmeträgers aus dem Wärmespeicher mehrere Entnahmestellen in vertikaler Ebene vor. Die Umschaltung auf die entsprechende thermische Ebene ist mittels verschiedener Magnetventile und Steueralgorithmen sowohl mechanisch als auch steuerungsseitig relativ aufwendig. Ebenfalls nachteilig wirken sich wie oben dargestellt die im Wärmespeicher integrierten Wärmeübertrager in Gestalt der Rohrschlangen aus.

Die in DE 20 2007 010 410 U1 vorgeschlagene Lösung umgeht die Nachteile der im Warmwasserspeicher integrierten Wärmeübertrager. Im Ergebnis dieses Vorschlages entsteht jedoch eine Anlage, die durch zusätzliche Pumpen einen hohen apparativen sowie mess- und steuerungstechnischen Aufwand erfordert und damit auch relativ teuer ist.

Der Erfindung liegt die Aufgabe zu Grunde, ein weiter verbessertes Verfahren und eine elektronisch steuerbare Anlage der eingangs genannten Gattung zur Warmwasseraufbereitung mit einer weiter verbesserten effektiven Bewirtschaftung des Wärmespeichers und einer effektiven Warmwasseraufbereitung zu entwickeln, die vorteilhafter Weise, aber nicht ausschließlich für Kraft-Wärme-gekoppelte Einrichtungen zur Energieversorgung eingesetzt werden kann.

Erfindungsgemäß wird diese Aufgabe durch ein Verfahren nach den Merkmalen von Anspruch 1 und eine Anlage nach den Merkmalen von Anspruch 5 gelöst. Vorteilhafte Weiterbildungen der Erfindung ergeben sich aus den Unteransprüchen 2 bis 4 und 6 bis 8.

Kernstück der Erfindung ist die Entnahme des für die Warmwasseraufbereitung benötigten Wärmeträgers aus unterschiedlichen Speicherschichten eines Wärmepufferspeichers mit voneinander abweichenden Speichertemperaturen und die Vormischung des so entnommenen Wärmeträgers auf die erforderliche Vorlauftemperatur bevor dieser einem Wärmeübertrager, der nicht im Pufferspeicher integriert und vorzugsweise ein Plattenwärmeübertrager ist, zur Aufbereitung von warmen Wasser für den individuelle Bedarf und für Heizungszwecke zugeführt wird.

Das Vormischen des Wärmeträgers erfolgt durch ein Mischorgan, vorzugsweise einem Vierwegemischer, das in einer kaskadenförmigen -Reihenschaltung mit dem externen Wärmeübertrager und einem Heizungsvorlaufmischer zwischen dem Wärmepufferspeicher und dem Wärmeübertrager angeordnet ist. Hierbei sind die Eingänge des als Mischorgan dienen Vierwegemischers über Abnahmepunkte einzeln, an verschiedene Speicherschichten des Wärmepufferspeichers mit voneinander abweichenden Speichertemperaturen angeschlossen, während der Ausgang des Mischorgans mit dem externen Wärmeübertrager verbunden ist.

Um die Temperaturregelung weiter zu verbessern und noch differenzierter auszubilden, kann die vorgeschlagene zweistufige Kaskadierung natürlich beliebig erweitert werden.

Die Mischorgane der vorgeschlagenen Anlage sind vorzugsweise mit Servoantrieben ausgestattet und somit ansteuerbar. Die Ansteuerung übernimmt die zentrale Steuereinheit, die für das Mikro- BHKW und das Wärmemanagement ohnehin benötigt wird.

Über die zentrale Steuereinheit erfolgt ebenfalls die Warmwasseraufbereitung / Warmwasserbereitstellung, die Bewirtschaftung des Wärmepufferspeichers im Sinne einer effektiven Unterstützung der Temperaturschichtung zur Erhöhung der Speicherfähigkeit und die außentemperaturgeführte Regelung der Heizungsvorlauftemperatur.

Die für das Heizungssystem erforderliche Heizungsumwälzpumpe dient erfindungsgemäß gleichzeitig als Ladepumpe für den externen Wärmeübertrager zur Warmwasserbereitung. Dadurch kann auf die allgemein übliche, zusätzliche Warmwasserladepumpe verzichtet werden, was zur Minimierung der der Kosten beiträgt.

Bei der Entnahme von Warmwasser spricht ein Durchflussschalter an, der in der Kaltwasserleitung zum mechanischen Thermostatventil angeordnet ist. Hiernach wird der Vierwegemischer, der zwischen dem Wärmepufferspeicher und dem externen Wärmeübertrager angeordnet ist, so von der zentralen Steuerung angesteuert, dass der Wärmeträger zur Aufbereitung von warmem Wasser aus den Speicherschichten im Top- Bereich des Wärmepufferspeichers unter Zumischung aus den unteren Speicherschichten entnommen wird. Dabei wird die Temperatur des Wärmeträgers der in den externen Wärmeübertrager fließt soweit reduziert, dass eine Kalkbildung im Trinkwasser sicher minimiert bzw. verhindert wird. Vorzugsweise beträgt die Temperatur des auf diese Weise aufbereiteten Wärmeträger kleiner/gleich 60° C.

Die gemessene Temperatur des für den individuellen Bedarf gezapften Warmwassers dient als Führungsgröße für die Servoregelung des Vierwegemischers. Ein mechanischer Thermostatregler, der dem Mischventil für die Bereitstellung von warmen Brauchwasser für den individuellen Bedarf nachgeschaltet ist, dient dabei als Verbrühschutz.

Wichtig ist, dass gleichzeitig der Dreiwegemischer für den Heizungsvorlauf durchgesteuert und im Sommerbetrieb die kombinierte Heizungs- und Warmwasserladepumpe mit maximaler Drehzahl gestartet wird, da nur so der Durchfluss des Wärmeträgers durch den Plattenwärmeübertrager zur Erwärmung des Kaltwassers sichergestellt wird.

Für den Fall, dass alle Heizkörper abgestellt sind (Heizkörperthermostate sind geschlossen), erfolgt der Rücklauf über ein Differenzdruckventil im hydraulischen Kurzschlusskreis. Die Beendigung der Abnahme von warmem Brauchwasser wird von einem Durchflussschalter erfasst. Danach schaltet die Steuerung beide Mischorgane wieder auf Heizbetrieb bzw. in die stand- by-Position (Sommerbetrieb).

Im normalen Heizbetrieb ohne Entnahme von warmem Brauchwasser regelt der Dreiwegemischer auf bekannte Weise die Temperatur des Heizungsvorlaufes in Abhängigkeit vor der Außentemperatur. Neu und erfindungsgemäß ist, dass dem Dreiwegemischer ein zusätzliches Mischorgan in Form eines Vierwegemischers als Kaskade mit der Funktionalität der Aufbereitung des Wärmträgers und der Zusatzfunktion einer effektiven Bewirtschaftung des Wärmepufferspeichers vorgeschaltet ist. Die grundsätzliche Arbeitsweise des vorgeschalteten Mischerorgans besteht nun darin, für den eigentlichen Heizungsmischer eine Eingangstemperatur zur Verfügung zu stellen, die nur wenige Grad (ca. 2° C) über der berechneten (außentemperatur- geführten) Vorlauftemperatur für die Heizkörper liegt. Erreicht wird das, indem vorrangig der weniger temperierte Wärmeträger aus den unteren Speicherschichten des Wärmepufferspeichers genutzt wird und nur die Differenz aus der oberen, heißeren Speicherschicht, zugemischt wird. Der Heizungsvorlaufmischer regelt dann auf bekannte Art die exakte, außentemperaturgeführte Vorlauftemperatur mittels Zumischung aus dem Heizungsrücklauf aus.

Die erfindungsgemäße Lösung besteht also darin, dass der Heizungsmischer nicht mehr wie bisher, dem Stand der Technik entsprechend, direkt an das heiße Wasser in der oberen Schicht eines Wärmepufferspeichers angeschlossen ist und dieses dann permanent zur Vorlaufregelung entnimmt. Diese noch allgemein übliche Speicherfahrweise reduziert den Anteil an heißem Wasser im Speicher ohne zwingende Notwendigkeit, da die relativ hohe Temperatur (ca. 80 °C) zur Vorlaufregelung in der Regel nicht benötigt wird. Im Ergebnis sinkt dadurch die effektive thermische Kapazität des Wärmespeichers, da die Temperatur, insbesondere im mittleren Speicherbereich, vorzeitig absinkt. Letztlich wird dadurch thermische Kapazität verschenkt, die gerade für eine Optimierung der Mikro-BHKW - bzw. zum Betrieb von Stirlingmaschinen oder Brennstoffzellen dringend benötigt wird.

Ein weiterer Vorteil der erfindungsgemäßen Lösung besteht ferner darin, dass das eigentlich zur Bereitstellung des Warmwassers vorgehaltene Speichervolumen des oberen Speicherbereiches bei einer eventuellen Störung der KWK- Anlage ebenfalls zu Heizzwecken genutzt werden kann. Damit verlängert sich die mögliche Heizzeit, was durch die dann vollständige Speicherentladung erreicht wird. Vom Eintritt der Störung bis zur Wiederinstandsetzung der Wärmeerzeugereinheit vergrößert sich somit das nutzbare Zeitfenster, ohne dass die Wärmeversorgung über die Heizkörper reduziert werden muss. Der entstehende Nachteil, dass in dieser Zeit die Warmwasserbereitung eingeschränkt bzw. nicht genutzt werden sollte, kann letztlich in Kauf genommen werden, da dieser Fall ja nur sehr selten eintritt.

Die erfindungsgemäße Anlage kann somit überall dort eingesetzt werden, wo innovative KWK- Lösungen zur Versorgung von Gebäuden und Einrichtungen mit Wärme und elektrischer Energie realisiert werden. Eine Anwendung für klassische Lösungen mit einem Heizkessel/ Therme ist natürlich ebenfalls möglich.

Die Erfindung soll nachstehend an einem Ausführungsbeispiel näher erläutert werden. Die dazugehörige Zeichnung zeigt ein Blockschaltbild der erfindungsgemäßen Anlage.

In den Wärmepufferspeicher 1 wird die, beispielsweise aus einem KWK- System stammende Abwärme, im Top- Bereich des Speichers 1 eingekoppelt. Die Speisung der KWK- Anlage erfolgt aus der untersten Speicherschicht 15, die den kühlsten Bereich infolge der Heizungs- / Warmwasserrücklaufeinkopplung darstellt. Auf dieser Basis werden die thermische Beladung, die Laufzeitoptimierung und die Brennwertnutzung der KWK- Anlage sichergestellt.

Im Wärmepufferspeicher 1 selbst bildet sich eine thermische Schichtung aus, die infolge der Anordnung der verschiedenen Entnahmepunkte 12, 13 , 14 und der erfindungsgemäßen, kaskadierten Vormischnung bestmöglich verläuft und damit den größtmöglichen thermischen Puffereffekt sicherstellt.

Die thermische Entladung des Speichers 1 erfolgt zum einen durch die erfindungsgemäße Entnahme von warmem Brauchwasser für den individuellen persönlichen Bedarf.

Der Durchflussschalter 7 signalisiert der zentralen Steuerung den Entnahmebeginn. Das Mischorgan 2 in Form eines Vierwegemischers 2, der Dreiwegemischer 4 und die Umwälzpumpe 5 werden von der elektronischen Steuerung 9 angesteuert. Das Mischerorgan 2 wird mit Hilfe eines schnellen Servomotors so eingeregelt, dass die Warmwassertemperatur Tww am Ausgang des externen Wärmeübertragers 3 den gewünschten Wert (z.B. 45°C) erreicht. Die Entnahme des heißen Wärmeträgers für die Aufbereitung des warmen Brauchwassers erfolgt aus dem Reservoir V-WW 1 a des Wärmepufferspeichers 1 über den Entnahmepunkt 14 und wird über die Nutzung des mittleren Entnahmepunkt 12 so geregelt, dass der Sollwert Tww am Temperatursensor 16 nicht überschritten wird. Der obere Entnahmepunkt 13 ist in dieser Betriebsart nicht aktiv und bleibt somit verschlossen. Der auf maximal 60 °C vorgemischte Wärmeträger gelangt in den Wärmeübertrager 3 und erwärmt im Gegenstrom das kalte Trinkwasser, wobei sich dieser selbst abkühlt. Eine Verkalkung im Wärmeübertrager 3 erfolgt nicht, da die Wärmeträgertemperatur nicht über 60 °C ansteigt.

Das Mischerorgan 4 ist vollständig durchgesteuert und besitzt keine Verbindung zum Rücklauf 11. Dadurch kann die kombinierte Heizungs- und Warmwasserladepumpe 5 den zum Teil abgekühlten Wärmeträger aus dem Wärmeübertrager 3 ansaugen und über das Differenzdruckventil 6 bzw. den Heizungsvorlauf 10 in den unteren Speicherbereich über den Rücklauf 11 einkoppeln. Damit gelangt gut abgekühltes Wasser in den unteren Speicherbereich und kann vom KWK- System im Sinne der Brennwertnutzung eingesetzt werden. Wird die Warmwasserentnahme beendet, signalisiert das der Durchflussschalter 7 der Steuerung und der Vierwegemischer 2 sowie der Heizungsmischer 4 und die Pumpe 5 werden auf Heizbetrieb oder im Sommer auf stand - by Position umgesteuert.

Im Heizbetrieb ohne Warmwasserentnahme wird der Wärmepufferspeicher 1 ebenfalls entladen. Wichtig ist jedoch, dass das Wärmeträger-Reservoir V-WW 1a in dieser Betriebsart nicht angezapft wird. Dieses Reservoir dient grundsätzlich zur Aufbereitung von warmem Brauchwasser für den individuellen persönlichen Bedarf.

Dieser Speicherbereich 1a kann, wie vorstehend dargelegt, jedoch auch bei einer Störung der Anlage zur Überbrückung der Zeit bis zur Instandsetzung genutzt werden (Störfallbeherrschung).

Für die Aufbereitung von warmem Wasser zu Heizungszwecken wird das Mischorgan 2 so angesteuert, dass eine Entnahme des Wärmeträgers am Abnahmepunkt 13 und die Zumischung aus der mittleren Speicherschicht über den Abnahmepunkt 12 erfolgt. Auf diese Weise kann eine effektive Entladung des Wärmepufferspeichers 1 für Heizzwecke sichergestellt werden und gleichzeitig das Reservoir V-WW 1 a geschont werden.

Im normalen Heizbetrieb wird der Vierwegemischer 2 so angesteuert, dass der Zweig 14 verschlossen bleibt. Die Entnahme des Wärmeträgers erfolgt über den Abnahmepunkt 13 aus der oberen Speicherschicht unter Zumischung von Wärmeträger mit einer geringeren Speichertemperatur aus der mittleren Speicherschicht über den Abnahmepunkt 12. Erfindungsgemäß liegt der Sollwert dabei immer geringfügig (ca. 2° C) über dem berechneten, aussentemperaturgeführten Heizungsvorlauf. Als Messfühler für diese Regelung wird der unmittelbar am Wärmeübertrager 3 installierte und primär für die Warmwassertemperaturmessung genutzte Temperatursensor 16 herangezogen. Diese Vereinfachung ist zulässig, da im reinen Heizbetrieb der gut isolierte Wärmeübertrager 3 und damit der installierte Sensor 16 die Temperatur des vorgemischten Wärmeträgers annimmt. Dieses, am Ausgang des Wärmeübertragers 3 ausströmende Wasser wird dem Eingang des Dreiwegemischers 4 zugeführt. Mittels Servoantrieb wird im Dreiwegemischer 4 die Heizungsvorlauftemperatur auf den von der Temperaturmessstelle 18 gemessenen Außentemperatur abhängigen Wert ausgeregelt. Auf bekannte Weise wird im Dreiwegemischer 4 solange abgekühltes Wasser aus dem Heizkreisrücklauf 11 zugemischt, bis der erforderliche Sollwert für den Heizungsvorlauf 10 erreicht ist. Durch die verwendeten kaskadenförmige Reihenschaltung wird sichergestellt, dass aus der oberen Speicherschicht des Wärmepufferspeichers 1 über den Abnahmepunkt 13 die gerinstmögliche Menge an heißem Wärmeträger und gleichzeitig die maximal mögliche Menge an Wärmeträger aus der mittleren Speicherschicht über den Abnahmepunkt 12 zur Erfüllung der Heizungsanforderung entnommen wird. Diese Verfahrensweise optimiert die Speicherbewirtschaftung dahingehend, dass ein möglichst großes Volumen an heißem Wärmeträger im Speicher 1 für die Warmwasseraufbereitung und die Heizung gepuffert werden kann. Im Ergebnis lässt sich so das vorhandene geometrische Speichervolumen des Wärmepufferspeichers 1 bestmöglich zur Energiespeicherung nutzen, wodurch das nicht effektive Takten des Wärmeerzeugers letztlich so gering wie möglich gehalten wird.

### BEZUGSZEICHENAUFSTELLUNG

- 1: Wärmepufferspeicher
- 1a: Vorhaltevolumen für die Warmwasserbereitung
- 1b: nutzbares Speichervolumen für die KWK- Optimierung
- 2: Mischorgan / Vierwegemischer
- 3: externer Wärmeübertrager
- 4: Dreiwegemischer
- 5: kombinierte Heizungs- und Warmwasserladepumpe
- 6: Differenzdruck- Überströmventil
- 7: Durchflussschalter
- 8: mechanisches Thermostatventil
- 9: elektronische Steuerung für das KWK- System und das Wärmemanagement
- 10: außentemperaturgeführter Heizungsvorlauf
- 11: Rücklauf aus Heizkreis und Warmwasseraufbereitung
- 12: Abnahmepunkt mittlere Speicherschicht
- 13: Abnahmepunkt obere Speicherschicht
- 14: Wärmeträgereinkopplung (aus KWK-System)
- 15: KWK- Vorlauf
- 16: Temperatursensor
- 17: Temperaturmessstelle (Heizungsvorlauf)
- 18: Temperaturmessstelle (Außenluft)

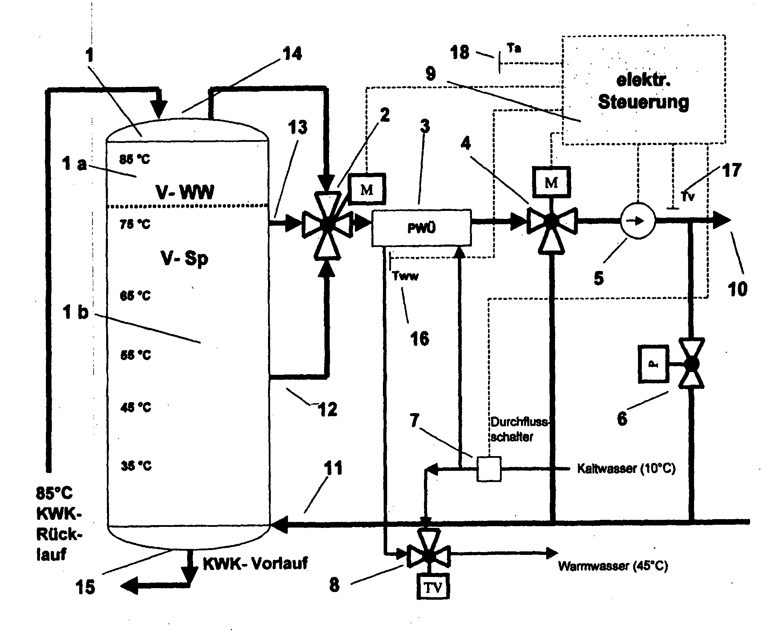

## Patentansprüche

1. Verfahren zur Aufbereitung von Warmwasser in Gebäuden und Einrichtungen, insbesondere zur Aufbereitung von Warmwasser in Einfamilienhäusern, ausgestattet mit einem Wärmepufferspeicher (1) für ein Wärmeträgermedium, der vorzugsweise als Schichtenspeicher ausgebildet ist und einem, vom Pufferspeicher (1) mit Wärmeenergie versorgten externen Wärmeübertrager (3) **dadurch gekennzeichnet, dass** der Wärmeträger für die Aufbereitung von warmen Brauchwasser und warmen Wasser für den Heizungsbetrieb aus unterschiedlichen Speicherschichten eines Pufferspeichers, mit voneinander abweichenden Speichertemperaturen entnommen, auf die gewünschte Vorlauftemperatur für die Warmwasseraufbereitung gemischt und anschließend einem gemeinsamen, externen Wärmeübertrager für die Aufbereitung von warmen Brauchwasser und warmem Wasser für den Heizungsbetrieb zugeführt wird.

2. Verfahren nach Anspruch 1, **dadurch gekennzeichnet, dass** die Temperatur des aufbereiteten Wärmeträgers so gewählt ist, dass die Gefahr von Verkalkungen an den Wärmeübertragern minimiert wird.

3. Verfahren nach Anspruch 1 und 2, **dadurch gekennzeichnet, dass** die Temperatur des aufbereiteten Wärmeträgers vorzugsweise kleiner/gleich 60° C beträgt.

4. Verfahren nach Anspruch 1, **dadurch gekennzeichnet, dass** im Heizungsbetrieb das Mischorgan zur Aufbereitung des Wärmeträgers als Vormischer für den Heizungsvorlauf eingesetzt wird.

5. Anlage zur Aufbereitung von Warmwasser in Gebäuden und Einrichtungen, insbesondere zur Aufbereitung von Warmwasser in Einfamilienhäusern mit einem Wärmepufferspeicher (1) für ein Wärmeträgermedium, der vorzugsweise als Schichtenspeicher ausgebildet ist, einem, vom Pufferspeicher (1) mit Wärmeenergie versorgten externen Wärmeübertrager (3), einem an den Wärmeübertrager (3) angeschlossen Heizungsvorlaufmischer (4) und einer Heizungsumwälzpumpe (5), **dadurch gekennzeichnet, dass** zwischen einem Wärmepufferspeicher (1) einem Wärmeübertrager (3) in kaskadenförmiger Reihenschaltung mit dem Wärmeübertrager (3) und dem Heizungsvorlaufmischer (4) ein Mischorgan (2) angeordnet ist.

6. Anlage nach Anspruch 5, **dadurch gekennzeichnet, dass** das Mischorgan (2) ein Vierwegemischer ist, dessen Eingänge an Abnahmepunkte (12; 13, 14) mit voneinander abweichenden Speicherschichttemperaturen eines als Schichtenspeicher ausgebildeten Wärmepufferspeichers (1) angeschlossen sind, während der Ausgang des Mischorgans (2) mit einem externen Wärmeübertrager (3) verbunden ist.

7. Anlage nach Anspruch 5 und 6, **dadurch gekennzeichnet, dass** der Warmwasser- und Heizungsbetrieb der Anlage mit einer gemeinsamen Heizungs- und Warmwasserladepumpe (5) erfolgt, die im Vorlauf des Heizungskreislaufes angeordnet ist.

8. Anlage nach Anspruch 5 und 6, **dadurch gekennzeichnet, dass** der externe Wärmeübertrager (3) ein Plattenwärmeübertrager ist.

## Claims

1. A method for providing hot water in buildings and facilities, in particular for providing hot water in detached houses, equipped with a heat buffer store (1) for a heat carrier medium, which heat buffer store is preferably designed as a stratified store, and with an external heat exchanger (3) which is supplied with heat energy from the buffer store (1), ***characterized in that*** the heat carrier required for providing hot service water and hot water for the heating operation is drawn from different store layers of a buffer store with differing store temperatures, is mixed to the desired feed temperature for providing the hot water, and is finally supplied to a common external heat exchanger for providing hot service water and hot water for the heating operation.

2. The method according to claim 1, ***characterized in that*** the temperature of the provided heat carrier is selected such that the danger of calcification on the heat exchangers is minimized.

3. The method according to claim 1 and claim 2, ***characterized in that*** the temperature of the provided heat carrier is preferably less than/equal to 60°C.

4. The method according to claim 1, ***characterized in that*** in the heating operation, the mixing element for providing the heat carrier is used as a pre-mixer for the heating flow.

5. A system for providing hot water in buildings and facilities, in particular for providing hot water in detached houses, comprising a heat buffer store (1) for a heat carrier medium that is preferably designed as a stratified store, an external heat exchanger (3) that is supplied with heat energy from the buffer store (1), and a heating flow mixer (4) that is connected to the heat exchanger (3), and a heating circulation pump (5), ***characterized in that*** between a heat buffer store (1) and a heat exchanger (3), a mixing element (2) is arranged in a cascade-like series connection with the heat exchanger (3) and the heating flow mixer (4).

6. The system according to claim 5, ***characterized in that* the** mixing element (2) is a four-way mixer, the inlets of which are connected to tapping points (12; 13, 14) with differing store layer temperatures of a heat buffer store (1) designed as a stratified store, while the outlet of the mixing element (2) is connected to an external heat exchanger (3).

7. The system according to claim 5 and claim 6, ***characterized in that*** the hot water and heating operation of the system is carried out with a common heating and hot water loading pump (5) that is arranged in the flow of the heating circuit.

8. The system according to claim 5 and claim 6, ***characterized in that*** the external heat exchanger (3) is a plate heat exchanger.

## Revendications

1. Procédé pour la préparation d'eau chaude dans des bâtiments et installations, en particulier pour la préparation d'eau chaude dans des maisons individuelles équipées d'un accumulateur de chaleur (1) pour un fluide caloporteur qui est constitué de préférence comme un réservoir stratifié et d'un réservoir à accumulation (1) avec un échangeur de chaleur (3) extérieur alimenté en énergie thermique ***caractérisé en ce que*** le caloporteur pour la préparation d'eau industrielle chaude et d'eau chaude pour l'exploitation de chauffage prélevé à partir des différentes couches de réservoir d'un réservoir d'accumulation, avec des températures de réservoir différentes les unes des autres, est mélangé à la température d'admission souhaitée pour la préparation d'eau chaude et est ensuite acheminé à un échangeur de chaleur extérieur commun pour la préparation d'eau industrielle chaude et d'eau chaude pour l'exploitation de chauffage.

2. Procédé selon la revendication 1 ***caractérisée en ce que*** la température du caloporteur préparé est choisie de telle sorte que le risque d'entartrages sur les échangeurs de chaleurs est minimisé.

3. Procédé selon la revendication 1 ou 2 ***caractérisé en ce que*** la température du caloporteur préparé est de préférence inférieure à/ égale à 60°C.

4. Procédé selon la revendication 1 ***caractérisé en ce que*** dans l'exploitation de chauffage, l'appareil de mélange pour la préparation du caloporteur est utilisé comme prémélangeur pour l'admission du chauffage.

5. Installation pour la préparation d'eau chaude dans des bâtiments et équipements, en particulier pour la préparation d'eau chaude dans des maisons individuelles avec un accumulateur de chaleur (1) pour un fluide caloporteur qui est constitué de préférence comme réservoir stratifié , un échangeur de chaleur (3) extérieur alimenté en énergie thermique par un accumulateur (1), un mélangeur d'admission de chauffage (4) raccordé à l'échangeur de chaleur (3) et une pompe de circulation de chauffage (5) ***caractérisée en ce qu'*** un appareil de mélange (2) est disposé entre un réservoir d'accumulation thermique (1), un échangeur de chaleur (3) en montage en série en cascade avec l'échangeur de chaleur (3) et le mélangeur d'admission de chauffage (4).

6. Installation selon la revendication 5 ***caractérisée en ce que*** l'appareil de mélange (2) est un mélangeur à quatre voies dont les entrées sont raccordées aux points de captage (12, 13, 14) avec des températures de couches de réservoir divergeant les unes des autres d'un accumulateur de chaleur (1) constitué comme un réservoir stratifié alors que la sortie de l'appareil de mélange (2) est relié avec un échangeur de chaleur (3) extérieur.

7. Installation selon la revendication 5 et 6 ***caractérisée en ce que*** l'exploitation d'eau chaude et de chauffage de l'installation a lieu avec une pompe de circulation d'eau chaude et de chauffage (5) commune qui est disposée dans l'admission du circuit de chauffage.

8. Installation selon la revendication 5 et 6 ***caractérisée en ce que*** l'échangeur de chaleur (3) extérieur est un échangeur de chaleur à plaques.
